# EUROPÄISCHE PATENTSCHRIFT

(11) **EP 1 388 471 B1**
(45) Veröffentlichungstag und Bekanntmachung des Hinweises auf die Patenterteilung: **29.09.2004**
(21) Anmeldenummer: 03011687.5
(22) Anmeldetag: 23.05.2003
(51) Int. Cl.: B60T 7/10

(54) **Feststellbremse eines Kraftfahrzeuges**
Vehicle parking brake
Frein de stationnement d'un véhicule

(30) Priorität: 09.08.2002 DE 10236593
(43) Veröffentlichungstag der Anmeldung: 11.02.2004
(73) Patentinhaber: AUDI AG, 85045 Ingolstadt (DE)
(72) Erfinder: Brok, Tobias, 85051 Ingolstadt (DE)
(74) Vertreter: Asch, Konrad, Dipl.-Ing.

(56) Entgegenhaltungen:
- EP-A- 0 792 781
- DE-A- 19 936 733
- US-A- 4 711 135
- US-A- 5 816 111
- US-A- 5 992 264

## Beschreibung

Die Erfindung betrachtet eine Feststellbremse eines Kraftfahrzeuges, wie z.B. aus EP-A-0 792 781 bekannt, mindestens bestehend aus einem Handbremshebel, der um eine Drehachse schwenkbar an einem ortsfest mit dem Kraftfahrzeug verbundenen Lagerbock gelagert ist, der Handbremshebel in einem Bereich zwischen einer Ausgangs- und einer Verriegelungsposition führbar und verriegelbar ist mittels einem in ein metallisches Zahnsegment eingreifbaren Rastelement, wobei das Zahnsegment im Lagerbock in einer Halteeinrichtung mittels Verbindungsmittel befestigt ist und der Handbremshebel sich in Wirkverbindung über mindestens einen Seilzug zu den Bremsmitteln der Hinterräder befindet.
Der Handbremshebel ist aus metallischem Werkstoff beispielsweise Leichtmetallguss gefertigt. Auch der Lagerbock ist aus Metall, beispielsweise Leichtmetall, gefertigt und auch das Rastelement sowie das zugehörige Zahnsegment sind ebenfalls aus metallischem Werkstoff gefertigt. Dies hat gegenüber bekannten technischen Lösungen Vorteile hinsichtlich geringeren Verschleißes und geringerer Kosten. Bei einer solchen bekannten Feststellbremse mit einem auf ein Zahnsegment einwirkenden Rastelement existiert eine für den Fahrer wahrnehmbare Geräuschentwicklung, die durch das Aufschlagen des Rastelements auf das metallische Zahnsegment entsteht.

Aus Komfortgründen soll das Rastgeräusch beim Betätigen der Feststellbremse sehr leise und angenehm sein.

Aufgabe der Erfindung ist es, das Rastgeräusch bei einer betätigten Feststellbremse eines Kraftfahrzeuges. die mindestens ein metallisches Zahnsegment und entsprechendes Rastelement umfasst, deutlich zu reduzieren.

Die Aufgabe wird gelöst entsprechend den kennzeichnenden Merkmalen des Anspruch 1.

Das metallische Zahnsegment einer Feststellbremse wird in einer am metallischen Lagerbock ausgebildeten Halterung gehalten. Der Lagerbock kann karosserieseitig befestigt sein. Die Halterung hat Führungsflächen ausgebildet entlang denen das Zahnsegment mit einer Kontaktfläche (Einsteckfläche) führbar ist und dort an einem Anschlag der Halterung haltbar ist. In dieser Halterungsposition liegt die Kontaktfläche des Zahnsegments formschlüssig am Lagerbock an. Die von der Führungsfläche der Halterung des Lagerbocks überdeckte Kontaktfläche des Zahnsegments wird erfindungsgemäß durch ein geräuschdämmendes Einsatzteil beispielsweise eine Folie oder einen Kunststoffeinsatz oder alternativ durch eine Beschichtung z.B. einen vulkanisierten Gummiüberzug vom Lagerbock bzw. der Karosserie entkoppelt. Die Kontaktfläche des Zahnsegments ist jene Fläche, die mit dem Lagerbock bzw. Karosserieteilen in Berührung steht.
Die geräuschdämmende Folie kann vorteilhafter Weise auf dem entsprechenden Flächenabschnitt der Kontaktfläche (Einsteckfläche) des Zahnsegments angeordnet sein. Es besteht aber auch die Möglichkeit, diese geräuschdämmende Folie in der Halterung des Lagerbocks anzuordnen. Beide Gestaltungen sind möglich. Die Erfindung lehrt, mit einer gezielten, lokalen Positionierung einer geräuschdämmenden Folie (Einsatzteil), einem Gummiüberzug (Beschichtung) oder einem Kunststoffüberzug eine deutliche akustische Entkopplung des Zahnsegments vom Lagerbock des Handbremshebels bzw. von der Karosserie zu ermöglichen.

Im weiteren wird auch zwischen Befestigungsmittel, welches das Zahnsegment in der Halterung des Lagerbocks befestigt und dem Lagerbock das geräuschdämmende Mittel angeordnet. Es kann aber auch beispielsweise eine geräuschdämmende Buchse, die mit geräuschdämmenden Material beschichtet istoder eine Kunststoffbuchse, zwischen Befestigungsmittel und Zahnsegment angeordnet sein. In beiden Fällen ist das Zahnsegment im Bereich des Befestigungsmittels auch gegenüber dem Lagerbock akustisch entkoppelt.

Somit sind sämtliche mechanischen Kontaktmöglichkeiten des Zahnsegments gegenüber dem Lagerbock bzw. der Karosserie akustisch entkoppelt.

Die Erfindung wird nachfolgend anhand eines Ausführungsbeispiels und der Zeichnungen beschrieben. Es zeigen
- **Fig. 1**: wesentliche mechanische Teile des Handbremshebels und Zahnsegment einer Feststellbremse
- **Fig. 2**: ausschnittsweise Darstellung eines Lagerbocks mit Halteeinrichtung und Einsteckfläche des Zahnsegments.

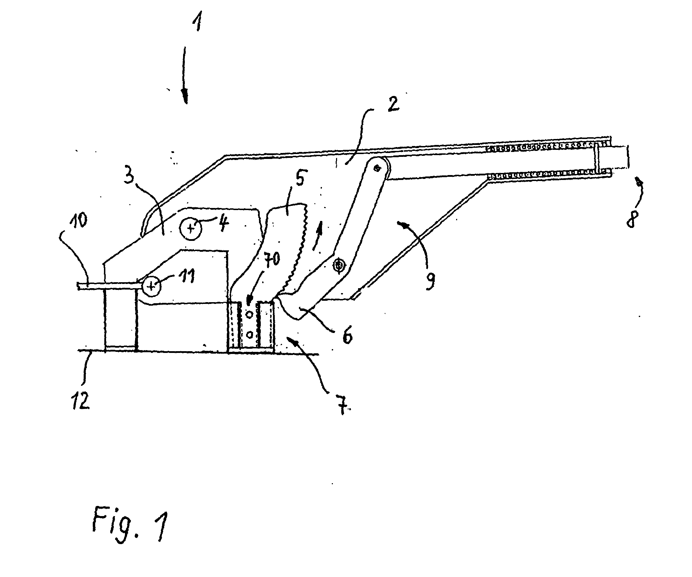

Der mit **Fig. 1** gezeigte Ausschnitt einer Feststellbremse 1 zeigt die wesentlichen Funktionselemente an denen die Erfindung erläutert werden kann. Ein Lagerbock 3 ist mit einem Strukturelement 12 der Karosserie verbunden. Im Lagerbock 3 ist eine Drehachse 4 geführt, um die der Handbremshebel 2 schwenkbar gelagert ist, der seinerseits in einer Zugachse 11 ein Aufnahmemittel für ein Ende des Zugmittels 10 gelagert hat. Im weiteren ist im Handbremshebel 2 ein Klinkenmechanismus 9 mit mindestens einem Betätigungsmittel 8 und einem Rastelement 6.
Im weiteren besitzt der Lagerbock 3 eine Halteeinrichtung 7 in der ein Zahnsegment 5 gehalten wird. Dieses Zahnsegment 5 ist mit einer Einsteckfläche in der Halteeinrichtung 7 eingeführt und mittels Verbindungsmittel 70 mit dem Lagerbock 3 verbunden. Dabei kann die Verbindung zwischen Zahnsegment 5 und Lagerbock 3 formschlüssig ausgeführt sein. Das Zahnsegment 5 hat entlang seiner Segmentkontur einzelne Zähne ausgebildet, in die das Rastelement 6 (eine Rastklinke) des Klinkenmechanismus 9 einrastbar ist. Bei manueller Betätigung des Betätigungsmittels 8 wird mittels Klinkenmechanismus 9 das Rastelement 6 aus einer Ausgangsposition in eine sogenannte Verriegelungsposition geführt. Dabei wird das Rastelement 6 entlang des Zahnsegments (Pfeilrichtung) geführt und letztlich eingerastet. Aus dieser Verriegelungsposition ist es jederzeit durch manuelle Betätigung des Betätigungsmittels 8 in eine andere Position, insbesondere die Ausgangsposition, zurückführbar.

Aus Gründen der mechanischen Festigkeit, des geringeren Verschleißes und auch aufgrund geringerer Kosten, ist der Handbremshebel 2 beispielsweise aus Leichtmetallguss, das Rastelement 6 aus Stahl und der Lagerbock 6 aus Leichtmetall gefertigt. Das Rastgeräusch, welches beim Führen des Rastelements 6 entlang des Zahnsegments 5 entsteht, wird dadurch entkoppelt, indem zwischen Zahnsegment 5 und Lagerbock 3 bzw. dem Strukturelement 12 der Karosserie eine passive, akustische Entkoppelung eingefügt wird. Dies erfolgt indem sämtliche Berührungsflächen des Zahnsegments 5 mit dem Lagerbock 3 durch ein geräuschdämmendes Mittel z.B. eine einzufügende Schicht akustisch isoliert werden.

Das betrifft auch das Befestigungsmittel 70 , welches das Zahnsegment 5 mit dem Lagerbock 3 verbindet. Beispielsweise der Niet zur Befestigung des Zahnsegments 5, wird durch eine geräuschdämmende Buchse vom Lagerbock 3 bzw. der Karosserie entkoppelt. Die geräuschdämmende Buchse kann somit selbst aus einem geräuschdämmenden Material (Kunststoff, Gummi) oder einen geräuschdämmenden Überzug besitzen.

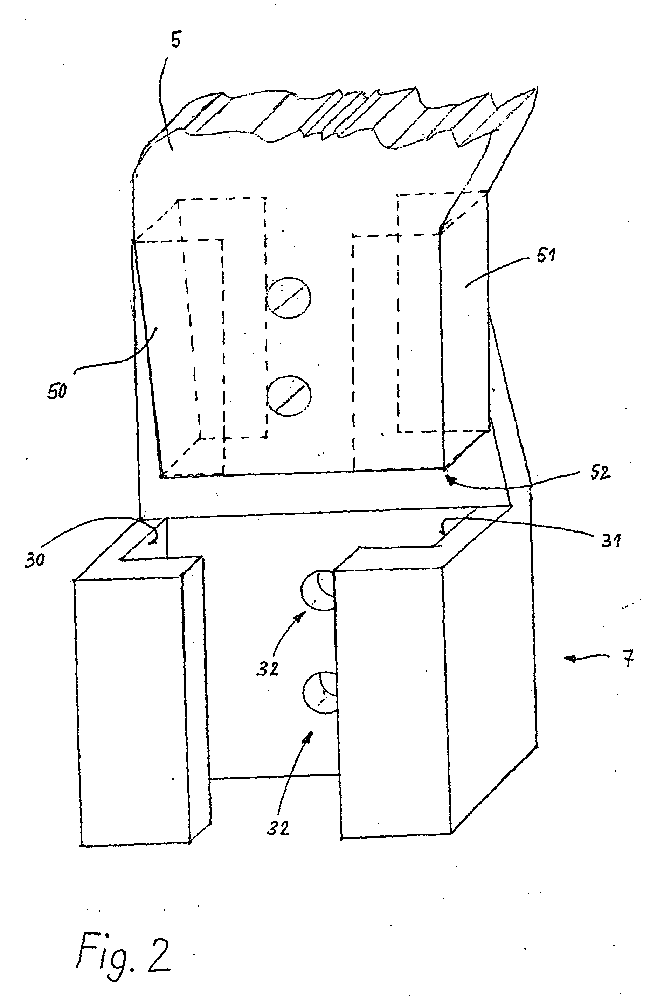

**Fig.2** zeigt im einzelnen die möglichen Kontaktflächen 50, 51 52 des Zahnsegments 5 gegenüber dem Lagerbock 3 bzw. der Karosserie. Diese Kontaktflächen können beispielsweise das geräuschdämmende Mittel erhalten.
Die Kontaktflächen 50,51 (entsprechen der Einsteckfläche) des Zahnsegments 5 werden im vorliegenden Beispiel im eingesteckten Zustand von den Führungsflächen 30,31 der Halterung 7 des Lagerbocks 3 überdeckt . Über die Bohrungen 32 wird das Befestigungsmittel 70 geführt und angeordnet.

Wesentlich ist, das gefunden wurde, dass mit dieser Maßnahme das Rastgeräusch bei einer Feststellbremse deutlich reduziert werden kann. Der Vorteil besteht darin, dass mit dieser lokalen Maßnahme keine Materialsubstitution einhergehen muss, auf verschleißbehaftete und temperaturabhängige Materialien verzichtet werden konnte. Es werden keine zusätzlichen, kostenaufwendigen passiven oder aktiven Dämpfungsmassnahmen erforderlich. Das erfindungsgemäße Mittel ist kostengünstig.

## Patentansprüche

1. Feststellbremse für ein Kraftfahrzeug, mindestens bestehend aus einem Handbremshebel (2), der um eine Drehachse (4) schwenkbar an einem ortsfest mit dem Kraftfahrzeug verbindbaren Lagerbock (3) gelagert ist, und der in einem Bereich zwischen einer Ausgangs- und einer Verriegelungsposition führbar und fixierbar ist mittels einem in ein metallisches Zahnsegment (5) eingreifenden Rastelement (6), wobei das Zahnsegment (5) im Lagerbock (3) in einer Halteeinrichtung mittels Verbindungsmittel (70) befestigt ist, und der Handbremshebel (2) in Wirkverbindung über mindestens einen Seilzug (10) zu den Bremsmitteln der Hinterräder montierbar ist **dadurch gekennzeichnet, dass** auf der Kontaktfläche (50,51,52) zwischen Zahnsegment (5) und Lagerbock (3) ein geräuschdämmendes Mittel angeordnet ist und dass zwischen Verbindungsmittel (70) und Zahnsegment (5) ebenfalls das geräuschdämmende Mittel angeordnet ist.

2. Feststellbremse nach Anspruch 1, **dadurch gekennzeichnet, dass** das geräuschdämmende Mittel eine Beschichtung ist.

3. Feststellbremse nach Anspruch 1, **dadurch gekennzeichnet, dass** das geräuschdämmende Mittel ein geräuschdämmendes Einsatzteil ist.

4. Feststellbremse nach Anspruch 3, **dadurch gekennzeichnet, dass** das Einsatzteil eine Folie ist.

5. Feststellbremse nach Anspruch 1, **dadurch gekennzeichnet, dass** das geräuschdämmende Mittel zwischen Befestigungsmittel (70) und Zahnsegment (5) eine Kunststoffbuchse ist.

## Claims

1. Parking brake for a motor vehicle, consisting at least of a handbrake lever (2), which is swivelled about an axis of rotation (4) on a plummer block (3) that can be permanently connected to the motor vehicle, and which can be guided and fixed in an area between an output and a locking position by means of a stop element (6) engaging in a metal toothed segment (5), wherein the toothed segment (5) is secured in the plummer block (3) in a retaining device by means of connection means (70), and wherein the handbrake (2) can be mounted ion the braking means for the rear wheels in an operating connection by at least one cable pull (10), **characterised in that** a noise damping means is arranged on the contact surface (50, 51, 52) between the toothed segment (5) and the plummer block(3), and n that the noise damping means is also arranged between the connection means (7) and the toothed segment (5).

2. Parking brake according to Claim 1, **characterised in that** the noise damping means is a coating.

3. Parking brake according to Claim 2, **characterised in that** the noise damping means is a noise damping insert component.

4. Parking brake according to Claim 3, **characterised in that** the insert component is a film.

5. Parking brake according to Claim 12, **characterised in that** the noise damping means between the fastening means (70) and the toothed segment (5) is a plastic bushing.

## Revendications

1. Frein d'immobilisation pour un véhicule automobile, constitué d'au moins un levier (2) de frein à main qui peut être monté de façon pivotante autour d'un axe de rotation (4), est monté sur un support (3) pouvant être relié solidairement au véhicule automobile, et qui peut être déplacé dans une zone entre une position de départ et une position de verrouillage, et fixé au moyen d'un élément d'encliquetage (6) s'engageant dans un segment denté (5) métallique, le segment denté (5) étant fixé sur le support (3) dans un dispositif de retenue à l'aide d'un moyen de liaison (70), et le levier (2) de frein à main pouvant être monté en liaison active avec les moyens de freinage des roues arrière par l'intermédiaire d'au moins un tirant à câble (10), **caractérisé en ce qu'**un moyen amortissant le bruit est disposé sur les surfaces de contact (50, 51, 52) entre le segment denté (5) et le support (3), et **en ce que** le moyen amortissant le bruit est également disposé entre le moyen de liaison (70) et le segment denté (5).

2. Frein d'immobilisation selon la revendication 1, **caractérisé en ce que** le moyen amortissant le bruit est un revêtement.

3. Frein d'immobilisation selon la revendication 1, **caractérisé en ce que** le moyen amortissant le bruit est un élément d'insert amortissant le bruit.

4. Frein d'immobilisation selon la revendication 3, **caractérisé en ce que** l'élément d'insert est un film.

5. Frein d'immobilisation selon la revendication 1, **caractérisé en ce que** le moyen amortissant le bruit entre le moyen de fixation (70) et le segment denté (5) est une douille en matière plastique.
